# EUROPÄISCHE PATENTANMELDUNG

(11) **EP 3 223 031 A1**
(43) Veröffentlichungstag der Anmeldung: **27.09.2017**
(21) Anmeldenummer: 17160176.8
(22) Anmeldetag: 09.03.2017
(51) Int. Cl.: G01S 3/04, G01S 13/75, H01Q 3/24

(54) **LOKALISIERUNGSVORRICHTUNG ZUR FUNKWELLENGESTÜTZTEN LOKALISIERUNG EINES TRANSPONDERS**

(30) Priorität: 23.03.2016 DE 102016105468
(71) Anmelder: SICK AG, 79183 Waldkirch/Breisgau (DE)
(72) Erfinder: Pilzner, Olaf, 22455 Hamburg (DE)
(74) Vertreter: Manitz Finsterwald Patentanwälte PartmbB

(57) **Zusammenfassung**

Die Erfindung betrifft eine Lokalisierungsvorrichtung zur funkwellengestützten Lokalisierung eines Transponders, die eine Steuerungseinrichtung, eine Auswerteeinrichtung, eine Schalteinrichtung, ein erstes lineares Antennenarray und ein zweites lineares Antennenarray umfasst. Das erste Antennenarray und das zweite Antennenarray sind unabhängig voneinander ansteuerbar, kreuzweise zueinander angeordnet und schließen einen Winkel ungleich Null zwischen sich ein. Zudem ist die Steuerungseinrichtung dazu angepasst, die Schalteinrichtung dazu anzusteuern, die Auswerteeinrichtung abwechselnd mit dem ersten Antennenarray und dem zweiten Antennenarray zu verbinden. Die Auswerteeinrichtung ist dazu angepasst, einen ersten Empfangswinkel zu ermitteln, unter dem ein Funkwellensignal des Transponders auf das erste Antennenarray trifft, wenn das erste Antennenarray mit der Auswerteeinrichtung verbunden ist, und einen zweiten Empfangswinkel zu ermitteln, unter dem ein Funkwellensignal des Transponders auf das zweite Antennenarray trifft, wenn das zweite Antennenarray mit der Auswerteeinrichtung verbunden ist.

## Beschreibung

Die vorliegende Erfindung betrifft eine Lokalisierungsvorrichtung zur funkwellengestützten Lokalisierung eines Transponders, insbesondere eines RFID (Radio-Frequency Identification)-Transponders. Die Lokalisierungsvorrichtung weist hierfür mehrere Antennen auf, um im Zuge einer Erfassung des Transponders elektromagnetische Funkwellen von dem Transponder empfangen zu können.

Bei herkömmlichen Lokalisierungsvorrichtungen wird der Transponder beispielsweise durch eine Phasendifferenz oder einen Laufzeitunterschied einer Empfangsfunkwelle lokalisiert, welcher sich zwischen zwei Antennen der Lokalisierungsvorrichtung ergibt. Die beiden Antennen sind hierbei um weniger als die halbe Wellenlänge der betreffenden Empfangsfunkwellenlänge beabstandet, sodass Mehrdeutigkeiten aufgrund von Vielfachen der Wellenlänge vermieden werden. Auf diese Weise ist der Transponder jedoch lediglich bezüglich eines Winkels zu der Ebene der Antennen lokalisierbar, weswegen diese Methode auch als "Direction of Arrival" (DOA) bekannt ist. Somit ist letztlich nur eine Ebene bestimmbar, in der sich der Transponder befindet. Eine genauere Lokalisierung erfordert mindestens drei Antennen, deren gleichzeitige Ansteuerung jedoch unerwünscht komplex ist und deren Anordnung einen vergleichsweise großen Raum erfordert. Als Alternative hierzu ist es bekannt, zur Lokalisierung des Transponders die relative Empfangsstärke bzw. den sogenannten RSSI (Received Signal Strength Indicator) auszuwerten. Der RSSI liefert jedoch eine grobe Abschätzung nur der Entfernung des Transponders. Ferner hat sich der RSSI als empfindlich gegenüber der Ausrichtung des Transponders und Störobjekten im Funkwellenfeld erwiesen, sodass eine entsprechende Lokalisierung des Transponders bislang nur mit unzureichender Genauigkeit möglich ist. Sofern sich der Transponder bewegt, kann er unter gewissen Umständen genauer lokalisiert werden. Dies ist jedoch wiederum komplex und nur dann hilfreich, wenn sich der Transponder tatsächlich bewegt.

Es ist eine Aufgabe der Erfindung eine zuverlässige Lokalisierungsvorrichtung der eingangs gennannten Art anzugeben, welche einerseits eine genauere Ortsbestimmung des Transponders erlaubt und andererseits eine geringe Komplexität besitzt. Ferner soll die Lokalisierungsvorrichtung kompakt sein, sodass die Montage vereinfacht ist und die Lagerhaltungskosten verringert sind.

Die Aufgabe wird gelöst durch eine Lokalisierungsvorrichtung mit den Merkmalen des Anspruchs 1.

Die erfindungsgemäße Lokalisierungsvorrichtung umfasst ein erstes lineares Antennenarray und ein zweites lineares Antennenarray, wobei das erste Antennenarray und das zweite Antennenarray unabhängig voneinander ansteuerbar sind und kreuzweise zueinander angeordnet sind. Ferner schließen das erste Antennenarray und das zweite Antennenarray einen Winkel ungleich Null zwischen sich ein.

Erfindungsgemäß werden zur Lokalisierung des Transponders also zwei separate Antennenarrays vorgesehen, wobei jedes Antennenarray zumindest zwei zueinander beabstandete Antennen umfasst, welche jeweils entlang einer imaginären Geraden angeordnet sind (lineares Array). Die Anordnung der Antennenarrays ist dabei verschränkt, d.h. die imaginären Geraden der beiden Antennenarrays kreuzen sich und schließen einen Winkel ungleich Null zueinander ein. Der Transponder ist somit bezüglich zweier unterschiedlicher Raumebenen bzw. Empfangswinkel lokalisierbar, sodass zumindest eine Gerade bestimmbar ist, auf der sich der Transponder befindet. Da die Antennenarrays kreuzweise und somit überlappend positioniert sind, ergibt sich insgesamt eine besonders platzsparende Anordnung. Die Lokalisierungsvorrichtung kann folglich sehr kompakt ausgebildet werden, was in vielen Anwendungsfällen einen wichtigen Vorteil gegenüber größeren Lokalisierungsvorrichtungen, insbesondere mit räumlich verteilten Antennenarrays, darstellt.

Zudem umfasst die erfindungsgemäße Lokalisierungsvorrichtung eine Steuerungseinrichtung, eine Auswerteeinrichtung und eine Schalteinrichtung. Die Steuerungseinrichtung ist dazu angepasst, die Schalteinrichtung dazu anzusteuern, die Auswerteeinrichtung abwechselnd mit dem ersten Antennenarray und dem zweiten Antennenarray zu verbinden, wobei die Auswerteeinrichtung dazu angepasst ist, einen ersten Empfangswinkel zu ermitteln, unter dem ein Funksignal des Transponders auf das erste Antennenarray trifft, wenn das erste Antennenarray mit der Auswerteeinrichtung verbunden ist, und wobei die Auswerteeinrichtung ferner dazu angepasst ist, einen zweiten Empfangswinkel zu ermitteln, unter dem ein Funkwellensignal des Transponders auf das zweite Antennenarray trifft, wenn das zweite Antennenarray mit der Auswerteeinrichtung verbunden ist. Auf diese Weise wird zur Bestimmung der beiden Empfangswinkel lediglich eine Auswerteeinrichtung benötigt, was die Herstellungskosten und die Fehleranfälligkeit der Lokalisierungsvorrichtung in beträchtlichem Maße reduziert. Die Realisierung der Schalteinrichtung ist hierbei mit vergleichsweise geringen Kosten verbunden, die insgesamt nicht negativ ins Gewicht fallen. Die Tatsache, dass die beiden Empfangswinkel nicht unmittelbar gleichzeitig erfasst werden können, ist in den meisten Anwendungsfällen kein Problem, da die Empfangswinkel beispielsweise im Zuge zweier Erfassungsvorgänge direkt hintereinander gemessen werden können und sich lediglich eine geringe Zeitdifferenz ergibt. Insbesondere bei Transpondern, welche mit nur geringer Geschwindigkeit bewegt werden oder lediglich im unbewegten, d.h. statischen Zustand erfasst werden sollen, ist eine sequenzielle Messung der Empfangswinkel hinreichend, um eine hohe Lokalisierungsgenauigkeit gewährleisten zu können. Es versteht sich, dass für jedes Antennenarray eine separate Elektronik, insbesondere eine separate Auswerteeinrichtung vorgesehen werden kann, sofern eine gleichzeitige Winkelbestimmung z.B. zur Lokalisierung schnell bewegter Transponder erwünscht ist.

Vorzugsweise erstrecken sich das erste Antennenarray und das zweite Antennenarray in einer gemeinsamen Ebene. Die Lokalisierungsgenauigkeit kann hierdurch erhöht werden, wobei gleichzeitig der Rechenaufwand für die Lokalisierung, insbesondere bezüglich einer Kalibrierung der Lokalisierungsvorrichtung, verringert ist. Die Lokalisierungsvorrichtung kann ferner flach und somit kompakt ausgebildet werden.

Das erste Antennenarray und das zweite Antennenarray können gleichartig ausgebildet sein, d.h. die einzelnen Antennen, die Positionen und/oder die Verschaltung der Antennen der jeweiligen Antennenarrays können ähnlich oder sogar identisch sein. Die Anzahl gleichartiger Teile der Lokalisierungsvorrichtung bzw. die Anzahl gleichartiger Herstellungsvorgänge kann somit erhöht werden, um Kosten zu sparen und das Risiko von Montagefehlern zu reduzieren. Ferner sind gleichartige oder identische Antennenarrays unter dem Aspekt einer hohen Lokalisierungsgenauigkeit vorteilhaft, da sich herstellungs- und betriebsbedingte Abweichungen von der Spezifikation der einzelnen Antennenarrays im Wesentlichen gegenseitig kompensieren.

Gemäß einer vorteilhaften Ausführungsform sind das erste Antennenarray und das zweite Antennenarray durch ein jeweiliges Antennenpaar gebildet, d.h. beide Antennenarrays umfassen jeweils lediglich zwei Antennen. Alternativ ist es jedoch auch möglich, mehr als zwei Antennen pro Antennenarray vorzusehen, beispielsweise um die Lokalisierungsgenauigkeit bedarfsabhängig noch weiter zu erhöhen.

Nach einer weiteren Ausführungsform weisen das erste Antennenarray und das zweite Antennenarray einen gemeinsamen Schnittpunkt auf, welcher einem geometrischen Mittelpunkt des ersten Antennenarrays und des zweiten Antennenarrays entspricht. Der Schnittpunkt ist hierbei durch denjenigen Punkt definiert, an dem sich die imaginären Geraden schneiden, welche jeweils die lineare Erstreckungsrichtung der beiden Antennenarrays kennzeichnen. So kann der Schnittpunkt von den beiden Enden des ersten Antennenarrays und den beiden Enden des zweiten Antennenarrays gleich weit entfernt sein. Die Lokalisierungsvorrichtung kann auch aus diesem Grund kompakt ausgebildet werden, wobei zusätzlich ein symmetrischer Aufbau und eine Quaderform verwirklicht werden können.

Der Winkel, den das erste und zweite Antennenarray zwischen sich einschließen, beträgt vorzugsweise zumindest im Wesentlichen neunzig Grad. Die Antennenarrays sind also orthogonal zueinander angeordnet. Die Lokalisierungsberechnung ist hierdurch einfacher und kann zudem mit höherer Genauigkeit erfolgen, da sich die jeweiligen Messebenen bezüglich ihres Winkels maximal voneinander unterscheiden. Bei Verwendung von zwei Antennenpaaren in einer Ebene ergibt sich eine 2x2 Antennenmatrix, bei der die Antennen in den vier Ecken eines imaginären Quadrats angeordnet sind und entlang des Umfangs äquidistant zueinander beabstandet sind.

Zur Realisierung einer Lokalisierungsvorrichtung mit einem einfachen und kompakten Aufbau können das erste Antennenarray und das zweite Antennenarray auf einem gemeinsamen Träger befestigt sein. Beispielsweise kann ein gemeinsames Substrat, insbesondere eine Leiterplatte oder ein Leiterrahmen, für die beiden Antennenarrays vorgesehen sein.

Gemäß einer weiteren Ausführungsform umfasst die Lokalisierungsvorrichtung ein Antennenmodul mit einem Modulgehäuse, wobei das erste Antennenarray und das zweite Antennenarray gemeinsam in dem Modulgehäuse untergebracht sind. Die Lokalisierungsvorrichtung ist somit besonders gut handhabbar und insbesondere im Zuge der Montage oder während des Betriebs vor äußeren Einflüssen geschützt. So ist die Lokalisierungsvorrichtung beispielsweise zur Verwendung in einer industriellen Umgebung geeignet, in der Staub, Feuchtigkeit und dergleichen die korrekte Funktionsweise der Lokalisierungsvorrichtung - ohne einen entsprechenden Schutz - beeinträchtigen könnten.

Die Steuerungseinrichtung, die Auswerteeinrichtung und die Schalteinrichtung können vorteilhaft in dem genannten Modulgehäuse untergebracht sein, sodass zusätzlich zu den Antennenarrays auch die Elektronik der Lokalisierungsvorrichtung durch das Gehäuse geschützt ist.

Vorzugsweise ist die Auswerteeinrichtung dazu angepasst, den ersten Empfangswinkel und den zweiten Empfangswinkel miteinander zu verrechnen, um einen Richtungsvektor des Transponders zu bestimmen. Mit anderen Worten kann eine Gerade bestimmt werden, welche ausgehend von der Lokalisierungsvorrichtung die Richtung des Transponders angibt, d.h. der Transponder "sitzt" auf der Geraden. Es versteht sich, dass die Berechnung des Richtungsvektors alternativ in der Steuerungseinrichtung durchgeführt werden kann, sofern keine separate Auswerteinrichtung vorgesehen ist oder diese in der Steuerungseinrichtung integriert ist.

Nach einer weiteren Ausführungsform ist die Auswerteeinrichtung dazu angepasst, den ersten Empfangswinkel und den zweiten Empfangswinkel sowie eine Information über eine vorbestimmte Ebene, in der sich der Transponder befindet, miteinander zu verrechnen, um eine Position des Transponders zu bestimmen. Mit anderen Worten kann ein Schnittpunkt des vorstehend genannten Richtungsvektors mit der vorbestimmten Ebene ermittelt werden, um die Position des Transponders bezüglich aller drei Raumkoordinaten zu bestimmen. Die Information über die vorbestimmte Ebene kann beispielsweise eine vorbestimmte Entfernung zwischen der Lokalisierungsvorrichtung und dem Boden einer Industriehalle umfassen, in der sich die Lokalisierungsvorrichtung und der Transponder befinden. Hierbei wird die Information ausgenutzt, dass sich der Transponder z.B. immer in unmittelbarer Bodennähe befindet, z.B. wenn der Transponder an einem Wagen eines automatischen Fördersystems angebracht ist. Die Lokalisierungsvorrichtung kann hierbei z.B. an einem zentralen Punkt an der Decke der Industriehalle befestigt sein. Die Information über die Deckenhöhe kann beispielsweise in einem Speicher der Lokalisierungsvorrichtung gespeichert sein, um den Transponder im Zuge eines Erfassungsvorgangs in der Ebene des Hallenbodens lokalisieren zu können.

Die Erfindung wird nachfolgend lediglich beispielhaft anhand der Zeichnungen erläutert, in denen:
- Fig. 1A: eine erfindungsgemäße Lokalisierungsvorrichtung,
- Fig. 1B: eine schematische Übersicht der Anordnung von Antennen der Lokalisierungsvorrichtung von Fig. 1A, und
- Fig. 2: ein schematisches Schaltungsdiagramm einer Lokalisierungsvorrichtung zeigt.

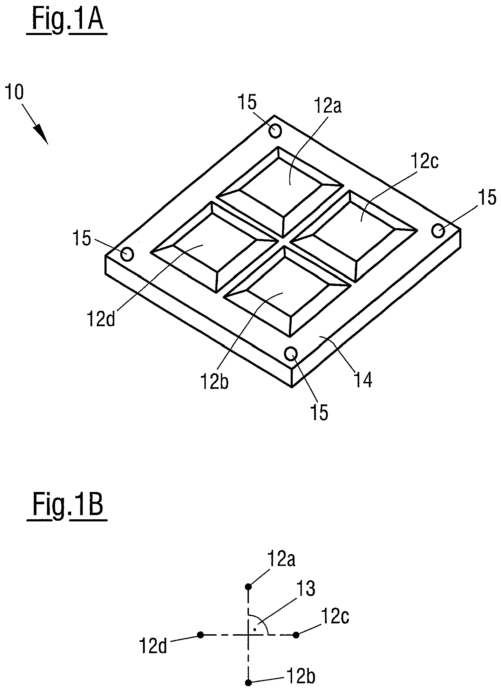

Eine in Fig. 1A gezeigte Lokalisierungsvorrichtung 10 umfasst vier gleichartige Antennen 12, welche auf einer gemeinsamen quadratischen Basisplatte 14 angeordnet sind. Die Antennen 12a und 12b bilden ein erstes lineares Antennenarray und die Antennen 12c und 12d bilden ein zweites lineares Antennenarray, wobei sich das erste Antennenarray und das zweite Antennenarray bezüglich ihrer linearen Erstreckung kreuzen und einen Winkel 13 von neunzig Grad zueinander einschließen (Fig. 1 B). Die Antennen 12 sind somit in einer 2x2 Matrixkonfiguration angeordnet, wobei sich die jeweils diagonal gegenüberliegenden Antennen 12 ein jeweiliges Antenennpaar bilden. Die Antennenarrays können unabhängig voneinander angesteuert werden.

Die Basisplatte 14 weist an den Ecken einen jeweiligen Durchgang 15 auf, um die Lokalisierungsvorrichtung 12 mit bekannten Befestigungsmitteln wie z.B. Schrauben an einem gewünschten Ort, insbesondere an einer Zimmer- oder Hallendecke (nicht gezeigt), befestigen zu können (Fig. 1A). Die Basisplatte 14 kann ferner einen nicht gezeigten Hohlraum zur Aufnahme von Elektronik aufweisen, um die Lokalisierungsvorrichtung 10 im Wesentlichen autark betreiben zu können. Die Antennen 12 können gekapselt und somit vor Schmutz, Feuchtigkeit und dergleichen geschützt sein. Die Lokalisierungsvorrichtung 10 ist in dem gezeigten Ausführungsbeispiel als kompaktes Antennenmodul ausgeführt, sodass die Lokalisierungsvorrichtung 10 platzsparend und einfach montiert werden kann.

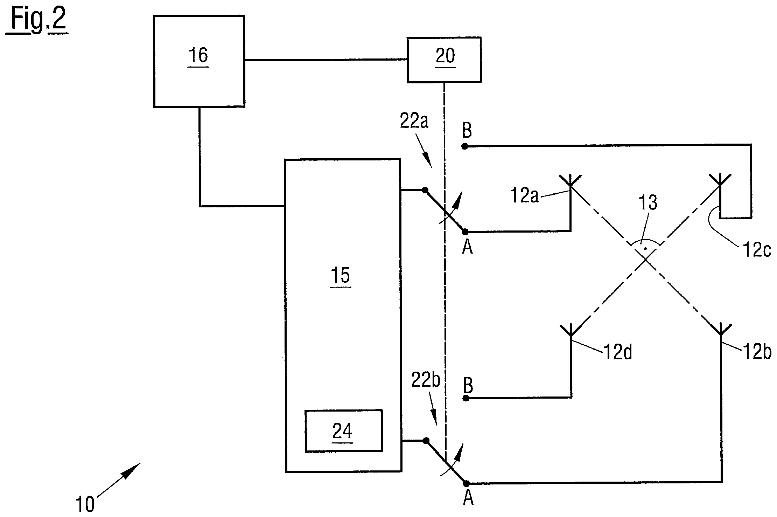

Die Lokalisierungsvorrichtung 10 ist dazu ausgebildet, einen nicht gezeigten RFID-Transponder zu lokalisieren. Hierzu kann die Elektronik der Lokalisierungsvorrichtung 10 wie in Fig. 2 dargestellt ausgeführt sein. Die Elektronik umfasst eine Steuerungseinrichtung 16, eine Auswerteeinrichtung 18 sowie eine Schalteinrichtung 20. Die Schalteinrichtung 20 ist mit zwei Schaltern 22a und 22b gekoppelt, welche gleichzeitig zwischen einer Stellung A und einer Stellung B geschaltet werden. In der in Fig. 2 gezeigten Stellung A sind die Antennen 12a und 12b mit der Auswerteeinrichtung 18 verbunden und die Antennen 12c und 12d von der Auswerteeinrichtung 18 getrennt. In der Stellung B ist es umgekehrt, d.h. die Antennen 12c und 12d sind mit der Auswerteeinrichtung 18 verbunden und die Antennen 12a und 12b sind von der Auswerteeinrichtung 18 getrennt. Die Auswerteeinrichtung 18 ist dazu angepasst, einen Empfangswinkel zu ermitteln, unter dem eine Funkwelle eines Transponders (nicht gezeigt) auf das erste oder zweite Antennenarray eintrifft.

Ein beispielhafter Lokalisierungsvorgang des Transponders läuft wie folgt ab. Die Schalter 22a, 22b befinden sich zunächst in der Stellung A (Fig. 2). Über eine oder mehrere Antennen 12 wird eine Funkwelle ausgesendet, um den Transponder zu erfassen. Gleichzeitig ist die Auswerteeinrichtung 18 dazu angepasst, einen ersten Empfangswinkel zu ermitteln, unter dem eine von dem Transponder ausgesendete Funkwelle auf das erste Antennenarray mit den Antennen 12a und 12b trifft. Danach steuert die Steuerungseinrichtung 16 die Schalteinrichtung 20 dazu an, die Schalter 22a, 22b in die Stellung B zu schalten. Die Auswerteeinrichtung 18 kann nun einen zweiten Empfangswinkel ermitteln, unter dem eine von dem Transponder ausgesendete Funkwelle auf das zweite Antennenarray mit den Antennen 12c und 12d trifft. Je nach Sendedauer des Transponders kann die Bestimmung der beiden Empfangswinkel im Zuge lediglich eines Erfassungsvorgangs (Lokalisierungsvorrichtung 10 sendet lediglich eine Funkwelle aus) oder zweier Erfassungsvorgänge (Lokalisierungsvorrichtung 10 sendet lediglich im Zuge des Umschaltens eine weitere Funkwelle aus) erfolgen. Die ermittelten ersten und zweiten Empfangswinkel können von der Auswerteinrichtung 18 zur Bestimmung eines Richtungsvektors des Transponders herangezogen oder direkt an eine übergeordnete Berechnungseinrichtung übermittelt werden. Sofern eine Lokalisierung autark bereits in der Auswerteeinrichtung 18 durchgeführt wird, kann eine vollständige Lokalisierung des Transponders unter Berücksichtigung einer in einem Speicher 24 der Auswerteeinrichtung 18 gespeicherten Information erfolgen. Die Information kann insbesondere einen Wert umfassen, welcher die Distanz zwischen der Lokalisierungsvorrichtung 10 und einer Ebene angibt, in der sich der Transponder stets befindet.

### Bezugszeichenliste

- 10: Lokalisierungsvorrichtung
- 12: Antenne
- 14: Basisplatte
- 15: Durchgang
- 16: Steuerungseinrichtung
- 18: Auswerteeinrichtung
- 20: Schalteinrichtung
- 22: Schalter
- 24: Speicher

## Patentansprüche

1. Lokalisierungsvorrichtung (10) zur funkwellengestützten Lokalisierung eines Transponders, die eine Steuerungseinrichtung (16), eine Auswerteeinrichtung (18), eine Schalteinrichtung (20), ein erstes lineares Antennenarray und ein zweites lineares Antennenarray umfasst,
wobei
(i) das erste Antennenarray und das zweite Antennenarray
- unabhängig voneinander ansteuerbar sind,
- kreuzweise zueinander angeordnet sind und
- einen Winkel (13) ungleich Null zwischen sich einschließen,
(ii) die Steuerungseinrichtung (16) dazu angepasst ist, die Schalteinrichtung (20) dazu anzusteuern, die Auswerteeinrichtung (18) abwechselnd mit dem ersten Antennenarray und dem zweiten Antennenarray zu verbinden,
(iii) die Auswerteeinrichtung (18) dazu angepasst ist, einen ersten Empfangswinkel zu ermitteln, unter dem ein Funkwellensignal des Transponders auf das erste Antennenarray trifft, wenn das erste Antennenarray mit der Auswerteeinrichtung (18) verbunden ist, und
(iv) die Auswerteeinrichtung (18) ferner dazu angepasst ist, einen zweiten Empfangswinkel zu ermitteln, unter dem ein Funkwellensignal des Transponders auf das zweite Antennenarray trifft, wenn das zweite Antennenarray mit der Auswerteeinrichtung (18) verbunden ist.

2. Lokalisierungsvorrichtung (10) nach Anspruch 1,
wobei sich das erste Antennenarray und zweite Antennenarray in einer gemeinsamen Ebene erstrecken.

3. Lokalisierungsvorrichtung nach Anspruch 1 oder 2,
wobei das erste Antennenarray und das zweite Antennenarray gleichartig ausgebildet sind.

4. Lokalisierungsvorrichtung nach zumindest einem der vorherigen Ansprüche,
wobei das erste Antennenarray und zweite Antennenarray durch ein jeweiliges Antennenpaar (12) gebildet sind.

5. Lokalisierungsvorrichtung (10) nach zumindest einem der vorherigen Ansprüche,
wobei das erste Antennenarray und das zweite Antennenarray einen gemeinsamen Schnittpunkt aufweisen, welcher einem geometrischen Mittelpunkt des ersten Antennenarrays und des zweiten Antennenarrays entspricht.

6. Lokalisierungsvorrichtung (10) nach zumindest einem der vorherigen Ansprüche,
wobei der Winkel (13) zumindest im Wesentlichen neunzig Grad beträgt.

7. Lokalisierungsvorrichtung (10) nach zumindest einem der vorherigen Ansprüche,
wobei das erste Antennenarray und das zweite Antennenarray auf einem gemeinsamen Träger (14) befestigt sind.

8. Lokalisierungsvorrichtung (10) nach zumindest einem der vorherigen Ansprüche,
wobei die Lokalisierungsvorrichtung (10) ein Antennenmodul mit einem Modulgehäuse umfasst, wobei das erste Antennenarray und das zweite Antennenarray gemeinsam in dem Modulgehäuse untergebracht sind.

9. Lokalisierungsvorrichtung (10) nach Anspruch 8,
wobei die Steuerungseinrichtung (16), die Auswerteeinrichtung (18) und die Schalteinrichtung (20) in dem Modulgehäuse untergebracht sind.

10. Lokalisierungsvorrichtung (10) nach zumindest einem der vorherigen Ansprüche,
wobei die Auswerteeinrichtung (18) dazu angepasst ist, den ersten Empfangswinkel und den zweiten Empfangswinkel miteinander zu verrechnen, um einen Richtungsvektor des Transponders zu bestimmen.

11. Lokalisierungsvorrichtung (10) nach zumindest einem der Ansprüche 1 bis 9,
wobei die Auswerteeinrichtung (18) dazu angepasst ist, den ersten Empfangswinkel und den zweiten Empfangswinkel sowie eine Information über eine vorbestimmte Ebene, in der sich der Transponder befindet, miteinander zu verrechnen, um eine Position des Transponders zu bestimmen.

12. Lokalisierungsvorrichtung nach zumindest einem der vorherigen Ansprüche,
wobei der Transponder ein RFID (Radio-Frequency Identification)- Transponder ist.
